# EUROPEAN PATENT APPLICATION

(11) **EP 3 179 712 A1**
(43) Date of publication of application: **14.06.2017**
(21) Application number: 15306975.2
(22) Date of filing: 10.12.2015
(51) Int. Cl.: H04N 5/232, G06T 3/40, G02B 27/01

(54) **METHOD FOR GENERATING OR CAPTURING A PANORAMIC VIEW, COMPUTER READABLE STORAGE MEDIUM AND APPARATUS CONFIGURED TO GENERATE OR CAPTURE A PANORAMIC VIEW**

(71) Applicant: Thomson Licensing, 92130 Issy-les-Moulineaux (FR)
(72) Inventor: Weber, Michael, 30559 Hannover (DE); Glaeser, Frank, 30449 Hannover (DE); Jachalsky, Joern, 30974 Wennigsen (DE)
(74) Representative: Huchet, Anne

(57) **Abstract**

A method for generating or capturing a panoramic view of a scene, a computer readable medium and an apparatus configured to generate or capture a panoramic view of a scene. A panoramic view of a scene, position information and orientation information linked to the retrieved panoramic view, and information about at least an orientation of a viewer are retrieved (10, 11, 12) via a data interface (21). A processing unit (24) determines (13) a corrected panoramic view of the scene based on the retrieved position information and orientation information linked to the retrieved panoramic view and the orientation of the viewer. A display interface (25) provides (14) the corrected panoramic view to a display.

## Description

### FIELD

The present solution relates to a method for generating a panoramic view, an apparatus configured to generate a panoramic view, a method for capturing a panoramic view, an apparatus configured to capture a panoramic view and computer readable storage media.

### BACKGROUND

When 360°-audio/video data is recorded, the camera and the microphone are typically mounted on a static tripod or on a moving vehicle. When consuming the 360°-audio/video data using, for example, virtual reality glasses, the video consumer is provided a front view direction corresponding to the front view direction in the video. This pertains to a situation in which the 360°-audio/video data is recorded with a moving camera, for example from a moving vehicle. The front view direction typically corresponds to the front of the vehicle. When looking left, right, behind, up and down, all these views of the consumer correspond to the directions as looking from the moving vehicle in the same direction.

This situation, however, changes when the camera used for recording the 360°-audio/video data is mounted, for example, on the head of a person. The front view direction of the camera in this setup is the direction of view of the person capturing the 360°-audio/video data. This can cause problems when said person rotates his or her head. In the recorded 360°-audio/video data, the consumer is provided images reflecting the head movement of the camera operator. However, this visual impression does not correspond to any real movement of the consumer's own head. This not only disturbs the virtual reality experience, but can also cause discomfort or sickness.

### SUMMARY

It would be desirable to provide a method for generating a panoramic view, an apparatus configured to generate a panoramic view, a method for capturing a panoramic view, an apparatus configured to capture a panoramic view and computer readable storage media, wherein the panoramic view should be corrected such that a more comfortable user experience can be provided upon display or consumption of the corrected panoramic view.

According to one aspect, a method for generating a panoramic view of a scene for display to a viewer comprises:
- retrieving a panoramic view of a scene;
- retrieving position information and orientation information linked to the retrieved panoramic view;
- determining at least an orientation of the viewer;
- determining a corrected panoramic view of the scene based on the retrieved position information and orientation information linked to the retrieved panoramic view and the orientation of the viewer; and
- providing the corrected panoramic view to a display

The present solution is based on the following considerations. To improve the viewing experience of 360°-audio/video data, which was recorded in first person view mode, the panoramic view of the scene has to be stabilized. This stabilization is in particular performed by setting the viewing direction of the audio/video data of the viewer to the moving direction of the recording camera. When the viewer watches the corrected video, for example using virtual reality glasses, and looks straight ahead without moving his or her head, the viewing direction is always the moving direction of the camera. Furthermore, the image data can be horizontally aligned, which means tilting operations of the camera are compensated. By doing this, the viewing experience is not disturbed by camera movements, which are for example induced by movements of the head (on which the camera was mounted). The user is provided a more comfortable viewing experience.

In an advantageous aspect, the method is further enhanced in that it comprises:
- retrieving a sequence of panoramic views;
- retrieving position information and orientation information linked to the retrieved sequence of panoramic views;
- determining a motion in the retrieved position information;
- determining a track in the position information,
- determining a corrected sequence of panoramic views such that the motion is compensated, in particular such that the panoramic views are horizontally aligned and/or a viewing direction in the corrected sequence of panoramic views is a moving direction along the track.

Advantageously, the panoramic view is not only corrected with respect to the orientation of the viewer, but also dynamically corrected in time. The sequences of panoramic views are in particular timely consecutive views, for example a movie or a sequence of images. The main viewing direction is always aligned to the direction of the movement of the first person capturing the sequence of panoramic views. Head rotation and tilting are corrected.

Furthermore, the method can be enhanced in that at least one of the motion and the moving direction are determined by analyzing sensor data being indicative of at least one of an orientation and a position. Advantageously, sensor data is provided, for example, by 3D-inertial gyroscope technology, GPS trackers or the like. These units can be applied to determine the position of the person and track the person capturing the panoramic views.

The correction of the sequence of panoramic views can be enhanced in that at least one of the orientation and the movement are furthermore determined by analyzing the sequence of panoramic views. In particular, this is performed if an error of the sensor data exceeds a predetermined threshold value.

In other words, the alignment of the panoramic view is corrected based on image information of the captured panoramic views themselves. For example, the line of the horizon in the panoramic views can be taken as a basis for alignment of the orientation. Furthermore, motion of the viewer can be derived from the sequence of panoramic views; the same applies to turns or tilts. The sensor data and the data, which is derived from the image sequence, supplement each other. In particular, by taking into account both, a more precise correction can be performed.

In another advantageous aspect, the method is further enhanced in that a change rate of at least one of the orientation and of the movement is determined and a correction of the sequence of panoramic views, in particular an adjustment of the alignment and/or the viewing direction, is adapted such that a smooth transition is performed when changing from a first to a second and different alignment and/or viewing direction.

In other words, correction of image and/or audio data is performed such that smooth transitions are generated if the direction of movement changes. For example, when the person capturing the panoramic image sequence moves straight from point A to point B, the front view is in the direction towards B. Then the person might stop and look around. The front view direction in the corrected panoramic view keeps constant. When the person later moves back to A, the front direction will switch towards A. For enhancement of the user experience watching the captured 360°-panoramic image data, a soft turn of the front direction will be performed. For example, at the beginning, in the middle or at the end of the standing phase, during which the user is not moving, the front direction starts smoothly changing from the initial direction towards point A.

In another advantageous aspect, the method further comprises:
- retrieving 360°-audio data linked to the retrieved sequence of panoramic views; and
- determining corrected 360°-audio data such that the motion is compensated, in particular such that the 360°-audio data is horizontally aligned and/or a front direction in the corrected 360°-audio data is a moving direction along the track.

Similar to the alignment of the video data, also the 360°-audio data will be corrected. Same advantageous aspects, which have been mentioned with respect to the correction of the image data, apply in a same or similar way also to the correction of the 360°-audio data.

Similarly, a computer readable storage medium has stored therein instructions enabling generating a panoramic view of a scene for display to a viewer, wherein the instructions, when executed by a computer, cause the computer to:
- retrieve a panoramic view of a scene;
- retrieve position information and orientation information linked to the retrieved panoramic view;
- determine at least an orientation of the viewer;
- determine a corrected panoramic view of the scene based on the retrieved position information and orientation information linked to the retrieved panoramic view and the orientation of the viewer; and
- provide the corrected panoramic view to a display.

Same or similar advantageous aspects, which have been mentioned with respect to the method for generating a panoramic view, apply to the computer readable storage medium in a same or similar way. This, in particular, pertains to the advantageous embodiments and aspects, which are mentioned above.

Also, in one embodiment an apparatus configured to generate a panoramic view of a scene for display to a viewer comprises:
- a data interface configured to retrieve a panoramic view of a scene, position information and orientation information linked to the retrieved panoramic view, and information about at least an orientation of the viewer;
- an image processing unit configured to determine a corrected panoramic view of the scene based on the retrieved position information and orientation information linked to the retrieved panoramic view and the orientation of the viewer; and
- a display interface configured to provide the corrected panoramic view to a display.

The apparatus is advantageously configured in that:
- the data interface is further configured to retrieve a sequence of panoramic views and position information and orientation information linked to the retrieved sequence of panoramic views; and
- the image processing unit is further configured to determine a motion based on the retrieved position information and a track based on the position information, and to determine a corrected sequence of panoramic views such that the motion is compensated, in particular such that the panoramic views are horizontally aligned and/or a viewing direction in the corrected sequence of panoramic views is a moving direction along the track.

In another advantageous aspect, the image processing unit is further configured to determine the motion of the viewer and/or the moving direction by analyzing sensor data being indicative of an orientation and/or a position of the viewer. Furthermore, the image processing unit is advantageously configured to determine the orientation and/or the movement of the viewer by analyzing the sequence of panoramic views if an error of the sensor data exceeds a predetermined threshold value.

For generating a smooth transition in the image data, the image processing unit is further advantageously configured to determine a change rate of the orientation and/or of the movement of the viewer and to perform a correction of the sequence of panoramic views. In particular, the image processing unit is configured to adapt an adjustment of the alignment and/or the viewing direction such that a smooth transition is performed when changing from a first to a second and different alignment and/or viewing direction.

Furthermore, in another aspect the apparatus is advantageously configured in that:
- the data interface is further configured to retrieve 360°-audio data linked to the retrieved sequence of panoramic views; and
- the image processing unit is further configured to determine corrected 360°-audio data such that the motion is compensated, in particular such that the 360°-audio data is horizontally aligned and/or a front direction in the corrected 360°-audio data is a moving direction along the track.

Same or similar advantages which have been mentioned with respect to the method for generating a panoramic view apply to the apparatus configured to generate a panoramic view in a same or similar way.

In another embodiment, an apparatus configured to generate a panoramic view of a scene for display to a viewer comprises a processing unit and a memory device having stored therein instructions, which, when executed by the processing unit, cause the apparatus to:
- retrieve a panoramic view of a scene;
- retrieve position information and orientation information linked to the retrieved panoramic view;
- determine at least an orientation of the viewer;
- determine a corrected panoramic view of the scene based on the retrieved position information and orientation information linked to the retrieved panoramic view and the orientation of the viewer; and
- provide the corrected panoramic view to a display.

According to another aspect, a method for capturing a panoramic view of a scene comprises:
- capturing a panoramic view of a scene with a capturing device;
- determining a position and an orientation of the capturing device; and
- linking the determined position and orientation to the captured panoramic view and/or generating and storing a corrected panoramic view based on the determined position and orientation of the capturing device.

Similarly, a computer readable storage medium has stored therein instructions enabling capturing a panoramic view of a scene, wherein the instructions, when executed by a computer, cause the computer to:
- capture a panoramic view of a scene with a capturing device;
- determine a position and an orientation of the capturing device; and
- link the determined position and orientation to the captured panoramic view and/or generate and store a corrected panoramic view based on the determined position and orientation of the capturing device.

Also, in one embodiment an apparatus configured to capture a panoramic view of a scene comprises:
- a capturing device configured to capture a panoramic view of a scene;
- at least one position sensor configured to determine a position of the capturing device;
- at least one orientation sensor configured to determine an orientation of the capturing device; and
- a linking unit configured to link the determined position and orientation to the captured panoramic view and/or a processing unit configured to generate and store a corrected panoramic view based on the determined position and orientation of the capturing device.

In another embodiment, an apparatus configured to capture a panoramic view of a scene comprises a processing unit and a memory device having stored therein instructions, which, when executed by the processing unit, cause the apparatus to:
- capture a panoramic view of a scene with a capturing device;
- determine a position and an orientation of the capturing device; and
- link the determined position and orientation to the captured panoramic view and/or generate and store a corrected panoramic view based on the determined position and orientation of the capturing device.

With respect to the apparatus configured to generate a panoramic view, the method for capturing a panoramic view, the computer readable storage medium having stored therein instructions enabling capturing a panoramic view, aspects and embodiments mentioned with respect to the method for generating a panoramic view apply in a same or similar way.

It is in particular the processing unit, which is configured by the instructions stored in the memory, which performs the steps mentioned with respect to the method for generating a panoramic view, above. Furthermore, it is in particular the capturing device, which is configured to perform the steps mentioned with respect to the method for generating the panoramic view in for example in an online fashion. In particular, this applies to the determination of the position and the alignment and the correction of the captured image and/or audio data. Corrected panoramic view data is determined or computed by said capturing device.

The determined position and orientation may be used to generate a corrected panoramic view of the scene, which is then stored for later display on a display device. Preferably, the panoramic view of the scene is corrected such that a motion of the capturing device is compensated, in particular such that temporally successive panoramic views of a sequence of panoramic views are horizontally aligned and/or a viewing direction in the corrected sequence of panoramic views is a moving direction along a track of the capturing device. This allows playback of the corrected panoramic view also on less advanced 360° display devices, e.g. 360° display devices without the ability to evaluate information about position and orientation of the capturing device.

### BRIEF DESCRIPTION OF THE DRAWINGS

- Fig. 1: schematically illustrates a method for generating a panoramic view of a scene for display to a viewer;
- Fig. 2: depicts a simplified schematic diagram of an apparatus configured to generate a panoramic view of a scene for display to a viewer;
- Fig. 3: schematically illustrates a method for capturing a panoramic view of a scene;
- Fig. 4: shows a simplified schematic diagram of an apparatus configured to capture a panoramic view of a scene;
- Fig. 5 to 8: are simplified schematic illustrations of motion analysis, which is performed by analyzing panoramic image data, wherein Fig. 4 illustrates a rotation, Fig. 5 illustrates a movement, Fig. 6 illustrates a movement and a rotation, the latter being slower than the movement, and Fig. 7 illustrates a movement and a rotation, the latter being faster than the movement.

### DETAILED DESCRIPTION OF PREFERRED EMBODIMENTS

For a better understanding the principles of embodiments of the present solution shall now be explained in more detail in the following description with reference to the figures. It is understood that the present solution is not limited to these exemplary embodiments and that specified features can also expediently be combined and/or modified without departing from the scope of the present solution as defined in the appended claims. In the drawings, the same or similar types of elements or respectively corresponding parts are provided with the same reference numbers in order to prevent the item from needing to be reintroduced.

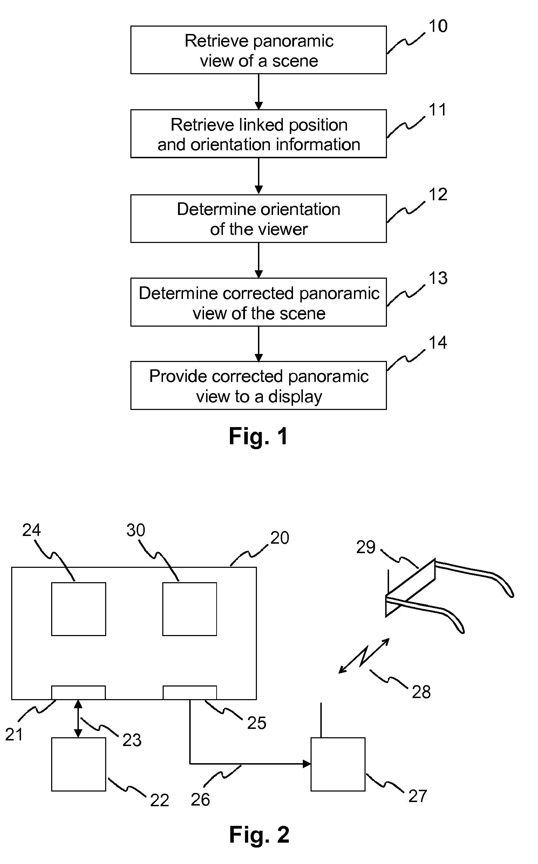

Fig. 1 schematically illustrates a method for generating a panoramic view of a scene for display to a viewer. Initially a panoramic view of a scene is retrieved 10. In addition, also position information and orientation information linked to the retrieved panoramic view is retrieved 11. Then at least an orientation of the viewer is determined 12. Based on the retrieved position information and orientation information linked to the retrieved panoramic view and the orientation of the viewer a corrected panoramic view of the scene is determined 13. The corrected panoramic view is provided 14 to a display.

Fig. 2 shows a simplified schematic diagram of an apparatus 20 configured to generate a panoramic view of a scene for display to a viewer. The apparatus 20 comprises a data interface 21, which is configured to retrieve a panoramic view of a scene, which is image data of the panoramic view of the scene. In addition to this, the interface 21 is configured to retrieve position information and orientation information linked to the retrieved panoramic view. This data is in particular stored on a non-volatile storage medium 22, which is, for example, a hard disc or the like. The storage medium 22 and the data interface 21 are linked via a data link 23. The interface 21 is further configured to receive information about at least an orientation of the viewer. According to further embodiments not depicted, the data interface 21 receives the mentioned data or information via the data link 23 from other entities, for example via a network.

The apparatus 20 for generating a panoramic view further comprises a processing unit 24, e.g. a GPU or an image processing unit, configured to determine a corrected panoramic view of the scene based on the retrieved position information and orientation information linked to the retrieved panoramic view and the orientation of the viewer. The corrected panoramic view, which means image and/or audio data, is provided by the apparatus 20 at a display interface 25. The display interface 25 is linked via a further data link 26 to a base station 27 communicating, for example, via a wireless data link 28 with a pair of virtual reality glasses 29. The virtual reality glasses 29 serve as a display for displaying the corrected panoramic view to a user. The data interface 21 and the display interface 25 may be combined into a single interface. Also, the data link 23 and the further data link 26 may be implemented as a common data link.

The apparatus 20 may be a computer, workstation or the like, comprising a memory device 30, e.g. a non-transitory readable storage medium, which can be a volatile or a non-volatile storage medium. On the memory device 30, there are instructions stored enabling the apparatus 20, in particular the processing unit 24 of the apparatus 20, to generate a panoramic view of a scene for a display to a viewer. When executed, these instructions cause the processing unit 24 to retrieve a panoramic view of a scene. This is, for example, performed via the data interface 21. In addition to this, position information and orientation information linked to the retrieved panoramic view is retrieved. This can also be performed via the data interface 21. The processing unit 24 then determines at least an orientation of the viewer. Furthermore, it determines a corrected panoramic view of the scene based on the retrieved position information and orientation information linked to the retrieved panoramic view and the orientation of the viewer. Finally, the corrected panoramic view is provided to a display. This last step is, for example, performed by providing the respective data at the display interface 25 for a communication to the virtual reality glasses 29. Generation of the corrected panoramic view of a scene can be performed online or offline.

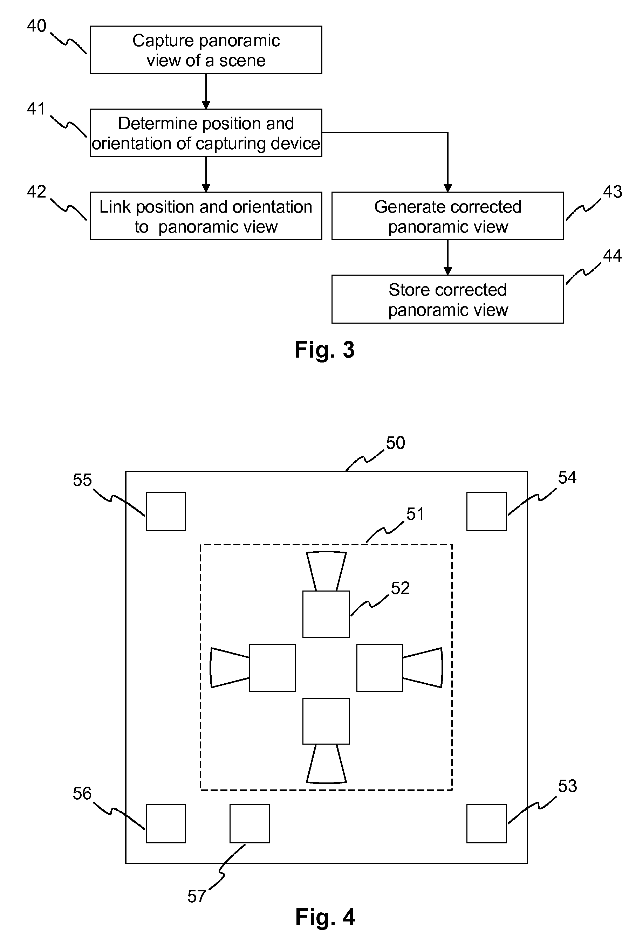

Fig. 3 schematically illustrates a method for capturing a panoramic view of a scene. Initially a panoramic view of a scene is captured 40 with a capturing device. In addition, a position and an orientation of the capturing device are determined 41. The determined position and orientation are then linked 42 to the captured panoramic view. In addition, a corrected panoramic view may be generated 43 based on the determined position and orientation of the capturing device. This corrected panoramic view is then stored 44, e.g. for later display on a display device.

Fig. 4 shows an apparatus 50 configured to capture a panoramic view of a scene. This apparatus 50 is for example a camera for capturing a 360°-view. The apparatus 50 comprises a capturing device 51 being configured to capture a panoramic view of a scene. The capturing device 51 comprises by way of an example only four cameras 52 having viewing directions directed to front, back, left and right. In addition to the cameras 52, the capturing device 51 can comprise one of more microphones (not depicted) being configured to capture 360°-audio data. Similar correction, which is performed for the video data, is advantageously also performed for the audio data.

In addition to this, the apparatus 50 comprises a position sensor 53 configured to determine a position of the capturing device 51. The position sensor can be, for example, a GPS sensor. Furthermore, there is an orientation sensor 54 being configured to determine an orientation of the capturing device 51. The orientation sensor 54 can be, for example, an electronic gyroscope or another suitable unit.

The apparatus 50 also comprises a linking unit 55, which is configured to link the determined position and orientation information, which are determined by the position sensor 53 and the orientation sensor 54, to the captured panoramic view, which is captured by the cameras 52.

The apparatus 50 can further comprise a mass storage (not depicted) for storing the data output of the linking unit 55. The apparatus 50 can also be linked to a suitable storage unit or to a computer via an online data link (for example a wireless data link) for storing the information.

The apparatus 50 can comprise a processing unit 56 and a memory device 57, which can be a volatile or a non-volatile memory. Said memory device 57 has stored therein instructions, which, when executed by the processing unit 56, cause the apparatus 50 to capture a panoramic view of the scene with the capturing device 51. Furthermore, the instructions executed by the processing unit 56 cause the apparatus 50 to determine a position and orientation of the capturing device 51. This is in particular performed using the position sensor 53 and the orientation sensor 54. Finally, the determined position and orientation information is linked to the captured panoramic view. This is in particular also performed by the processing unit 56. The processing unit 56 may further generate and store a corrected panoramic view based on the determined position and orientation of the capturing device 51.

During operation of the apparatus 50 a video stream and an audio stream are captured and after video stitching of the individual views covering the 360°-view, 360°-video data is provided. Similarly, by audio processing, 360°-audio data is provided. The orientation and movement data, which are captured by the position sensor 53 and the orientation sensor 54, are linked to the video data. In addition, the orientation and movement data may be used to generate a corrected panoramic view of the scene, which is then stored for later display on a display device. Preferably, the panoramic view of the scene is corrected such that a motion of the capturing device is compensated, in particular such that temporally successive panoramic views of a sequence of panoramic views are horizontally aligned and/or a viewing direction in the corrected sequence of panoramic views is a moving direction along a track of the capturing device.

During playback of the video data by the apparatus 20 of Fig. 2, the orientation and movement data of the recording device 22 is analyzed in order to generate correction data to remove rotation from the A/V data using the recorded orientation information. This will remove the up, down, left, right and lean to aside movements of the A/V capturing device 51. The result is 360°-A/V data, which is aligned horizontally with a fixed front view direction, for example towards north.

The front view direction of the A/V data is set to the moving direction of the capturing device 51 using, for example, GPS data, which means position information. To generate a horizontally aligned view, the front view position can be set in the x/y direction, which works best for movements on a ground, which means in an x/y plane. In scenarios with movements in z-direction, for example during sky diving, diving, climbing or other activities of this kind, it may be an option to set the front view direction also in z-direction.

To generate smooth turns, the front direction in the corrected panoramic view is changed smoothly. When the capturing user moves, for example, straight from a point A to point B, the front view and hearing direction is in direction towards B. Then the user might stop and look around. However, the front view and hearing direction keeps constant. Upon movement of the user back towards point A, the front view and hearing direction will switch towards point A. A soft turn of the front view/hearing direction is performed. This can start at the beginning, in the middle or at the end of the standing period.

Optionally, the orientation and the movement data of the video capturing device 51 can be generated or improved by analyzing the motion in the video data of by analyzing 3D video and audio data. This correction can be applied to improve the original A/V data on the fly during playback with the option to disable the improvements and to view the original recording data. The correction data can be stored as a separate file or can be embedded into the A/V data file, if the video container supports it.

This can be further helpful if the accuracy of the sensors 53, 54 for determination of the orientation and movement is low and the visual/audio data can be applied to supplement the position and orientation data. For determination of a general rotation, the position and orientation sensor 53, 54 can be the first choice, because no visual information is required and data is not deteriorated by moving objects, which can be present in the visual data. However, rotation or shakes can be too tiny or too quick to be accurately detected by the sensors 53, 54. Hence, correction based on visual information can result in a better stabilized video.

A situation in which a combination of the sensor data and the analysis of the visual information can be reasonable is if the GPS information, for example, is not accurate. This can happen in a situation in which the user is inside a building. For example, in combination with the orientation sensor, the rotations can be removed from the video data and the movement direction data can be determined easier, for example, by analyzing the movement over ground. The visual information can further include frequencies that cannot be detected by the human eye. Also active sensors that emit and receive light can be applied to acquire depth information, which can be useful to analyze the visual information.

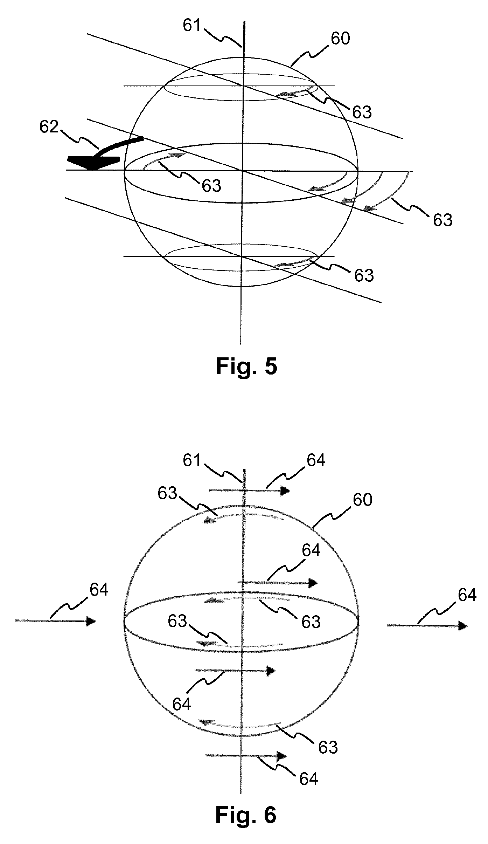

Determination of the movement based on an analysis of the video data will be outlined by making reference to Figs. 5 to 8 below.

The 360°-recording device, which can be the capturing device 51 in Fig. 4, is imaged as a globe 60 in Figs. 5 to 8. Rotation around the vertical axis 61 through the poles of the globe 60 is shown in Fig. 5. The rotation is indicated by rotational vector 62. Looking from the center of the globe 60, this rotation looks like a motion in one direction, which is indicated by motion vectors 63. This is a motion around the equator and near the equator it is a linear motion. Near the poles, it is a circular motion in opposite directions on north (counter clockwise) and south (clockwise). For a steady scene without moving objects, the angle between the positions at two points in time for all tracking points is the same and is equal to the angle of rotation.

Fig. 6 illustrates a linear movement, which is indicated by a movement vector 64. The linear movement without rotation, when looking from the center of the globe 60, looks like a linear motion from a certain point on the globe 60, where the globe 60 (i.e. the person capturing the scene) is moving to. This is indicated by motion vectors 63.

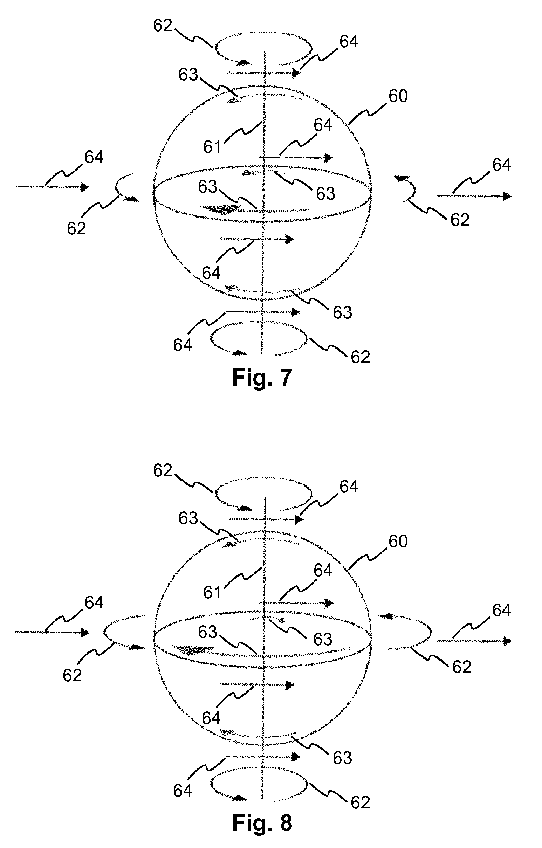

A more complex situation is illustrated in Figs. 7 and 8. There are linear movement and rotation at the same time, wherein in Fig. 7 the movement is slower than the rotation and in Fig. 8, the movement is faster than the rotation.

Hence, there are a movement vector 64 and a rotational vector 62. When looking from the center of the globe 60, the movement and rotation look like a motion from the point on the globe, where the globe 60 is moving to, to the point on the globe 60, the globe is coming from. At the poles, the motion is the same as without rotation. On all other areas, the rotation influences the motion depending on the amount of linear movement and rotation. If the rotation is slower than the movement (Fig. 7), a motion speed is decreased on one side and increased on the opposite side. This is illustrated by motion vectors 63 of different lengths.

If the rotation is faster than the movement, the motion direction on one side is reversed with respect to the other side, where the motion speed is increased. This is illustrated in Fig. 8. The motion vectors 63 at the equator are directed in opposite directions.

To minimize errors, moving objects in the A/V recorded data are preferably ignored during analysis of a motion.

All named characteristics, including those taken from the drawings alone, and individual characteristics, which are disclosed in combination with other characteristics, are considered alone and in combination as important to the invention. Embodiments according to the invention can be fulfilled through individual characteristics or a combination of several characteristics. Features which are combined with the wording "in particular" or "especially" are to be treated as preferred embodiments.

## Claims

1. A method for generating a panoramic view of a scene for display to a viewer, the method **comprising:**
- retrieving (10) a panoramic view of a scene;
- retrieving (11) position information and orientation information linked to the retrieved panoramic view;
- determining (12) at least an orientation of the viewer;
- determining (13) a corrected panoramic view of the scene based on the retrieved position information and orientation information linked to the retrieved panoramic view and the orientation of the viewer; and
- providing (14) the corrected panoramic view to a display.

2. The method according to claim 1, **further** comprising:
- retrieving a sequence of panoramic views;
- retrieving position information and orientation information linked to the retrieved sequence of panoramic views;
- determining a motion in the retrieved position information;
- determining a track in the position information; and
- determining a corrected sequence of panoramic views such that the panoramic views are horizontally aligned and/or a viewing direction in the corrected sequence of panoramic views is a moving direction along the track.

3. The method according to claim 2, **wherein** at least one of the motion and the moving direction is determined by analyzing sensor data being indicative of at least one of an orientation and a position.

4. The method according to claim 4, **wherein** at least one of the orientation and the movement is further determined by analyzing the sequence of panoramic views.

5. The method according to anyone of claims 2 to 4, **wherein** a change rate of at least one of the orientation and the movement is determined and a correction of the sequence of panoramic views with regard to the alignment or the viewing direction is adapted such that a smooth transition is performed when changing the viewing direction or changing from a first to a second alignment.

6. The method according to anyone of claims 2 to 5, **further** comprising:
- retrieving 360°-audio data linked to the retrieved sequence of panoramic views; and
- determining corrected 360°-audio data such that the 360°-audio data is horizontally aligned and/or a front direction in the corrected 360°-audio data is a moving direction along the track.

7. A computer readable storage medium (20) having stored therein instructions enabling generating a panoramic view of a scene for display to a viewer, wherein the instructions, when executed by a computer, cause the computer to:
- retrieve (10) a panoramic view of a scene;
- retrieve (11) position information and orientation information linked to the retrieved panoramic view;
- determine (12) at least an orientation of the viewer;
- determine (13) a corrected panoramic view of the scene based on the retrieved position information and orientation information linked to the retrieved panoramic view and the orientation of the viewer; and
- provide (14) the corrected panoramic view to a display.

8. An apparatus (20) configured to generate a panoramic view of a scene for display to a viewer, the apparatus (20) comprising:
- a data interface (21) configured to retrieve (10, 11, 12) a panoramic view of a scene, position information and orientation information linked to the retrieved panoramic view, and information about at least an orientation of the viewer;
- a processing unit (24) configured to determine (13) a corrected panoramic view of the scene based on the retrieved position information and orientation information linked to the retrieved panoramic view and the orientation of the viewer; and
- a display interface (25) configured to provide (14) the corrected panoramic view to a display.

9. The apparatus (20) according to claim 8, **wherein**
- the data interface (21) is further configured to retrieve a sequence of panoramic views and position information and orientation information linked to the retrieved sequence of panoramic views; and
- the processing unit (24) is further configured to determine a motion based on the retrieved position information and a track based on the position information, and to determine a corrected sequence of panoramic views such that the panoramic views are horizontally aligned and/or a viewing direction in the corrected sequence of panoramic views is a moving direction along the track.

10. The apparatus (20) according to claim 9, **wherein:**
- the data interface (21) is further configured to retrieve 360°-audio data linked to the retrieved sequence of panoramic views; and
- the processing unit (24) is further configured to determine corrected 360°-audio data such that the 360°-audio data is horizontally aligned and/or a front direction in the corrected 360°-audio data is a moving direction along the track.

11. An apparatus (20) configured to generate a panoramic view of a scene for display to a viewer, the apparatus (20) comprising a processing unit (24) and a memory device (20) having stored therein instructions, which, when executed by the processing unit (24), cause the apparatus (20) to:
- retrieve (10) a panoramic view of a scene;
- retrieve (11) position information and orientation information linked to the retrieved panoramic view;
- determine (12) at least an orientation of the viewer;
- determine (13) a corrected panoramic view of the scene based on the retrieved position information and orientation information linked to the retrieved panoramic view and the orientation of the viewer; and
- provide (14) the corrected panoramic view to a display.

12. A method for capturing a panoramic view of a scene, the method **comprising:**
- capturing (40) a panoramic view of a scene with a capturing device (51);
- determining (41) a position and an orientation of the capturing device (51); and
- linking (42) the determined position and orientation to the captured panoramic view and/or generating (43) and storing (44) a corrected panoramic view based on the determined position and orientation of the capturing device (51).

13. A computer readable storage medium (36) having stored therein instructions enabling capturing a panoramic view of a scene, wherein the instructions, when executed by a computer, cause the computer to:
- capture (40) a panoramic view of a scene with a capturing device (51);
- determine (41) a position and an orientation of the capturing device (51); and
- link (42) the determined position and orientation to the captured panoramic view and/or generate (43) and store (44) a corrected panoramic view based on the determined position and orientation of the capturing device (51).

14. An apparatus (50) configured to capture a panoramic view of a scene, the apparatus **comprising:**
- a capturing device (51) configured to capture (40) a panoramic view of a scene;
- at least one position sensor (53) configured to determine (41) a position of the capturing device (24);
- at least one orientation sensor (54) configured to determine (41) an orientation of the capturing device (24); and
- a linking unit (55) configured to link (42) the determined position and orientation to the captured panoramic view and/or a processing unit (56) configured to generate (43) and store (44) a corrected panoramic view based on the determined position and orientation of the capturing device (51).

15. An apparatus (50) configured to capture a panoramic view of a scene, the apparatus comprising a processing unit (56) and a memory device (57) having stored therein instructions, which, when executed by the processing unit (56), cause the apparatus (50) to:
- capture (40) a panoramic view of a scene with a capturing device (51);
- determine (41) a position and an orientation of the capturing device (51); and
- link (42) the determined position and orientation to the captured panoramic view and/or generate (43) and store (44) a corrected panoramic view based on the determined position and orientation of the capturing device (51).
